Europäisches Patentamt

**European Patent Office**

Office européen des brevets

(11) Publication number: **0 230 738**
A2

# (12) EUROPEAN PATENT APPLICATION

(21) Application number: 86309607.9

(22) Date of filing: 10.12.86

(51) Int. Cl.³: **F 16 J 15/32**

(30) Priority: 13.12.85 GB 8530748

(43) Date of publication of application:
05.08.87 Bulletin 87/32

(84) Designated Contracting States:
AT BE CH DE ES FR GB GR IT LI LU NL SE

(71) Applicant: J.H. FENNER & CO. LIMITED
Marfleet
Hull North Humberside, HU9 5RA(GB)

(72) Inventor: Felton, Anthony Bernard
19 Springfield Road
Sale Cheshire(GB)

(72) Inventor: Kairis, John Clifford
38 Loweswater Road
Tyldesley Manchester M29 7EG(GB)

(74) Representative: Funge, Harry et al,
M'CAW & CO. 41-51 Royal Exchange Cross Street
Manchester M2 7BD(GB)

(54) Shaft and like seals.

(57) A shaft or like seal is proposed wherein the sealing
member (15) is secured in position within a flanged casing
(11) by means of a spring washer (20), the washer (20) having
a castellated periphery thereto which presents a multiplicity
of radial limbs (22) engaged with the flange (13) of the casing
(11) as an interference fit therein.

FIG.1

EP 0 230 738 A2

- 1 -

## SHAFT AND LIKE SEALS

The invention concerns shaft and like seals.

Conventionally, fabricated seals are produced by telescoping a circular L-section casing into a larger L-section outer casing, the inner casing being constructed to compress the radial section of the sealing element when the axial portion of the outer casing is swaged over the inner casing to form a fluid tight joint in the region of the radial flange which prevents fluid by-passing the seal assembly during rotation or reciprocation of the shaft.

The object of the present invention is to provide an arrangement which not only avoids the need for an inner casing but also gives rise to a less expensive and at least equally effective means for securing the sealing member in position.

According to the present invention, a shaft or like seal comprising a casing having an annular part and a flange about a periphery of said annular part, a sealing member mounted in said casing, the sealing member having a radial flange thereto, and securing means operable to secure the sealing member in position in the casing with the radial flange of the sealing member clamped between such securing means and the annular part of the casing, is characterised in that the securing means comprises a spring washer having radial, casing engaging formations at a periphery thereof, the said radial formations being an interference fit relative to the flange of the said casing.

The invention will now be described further by way of example only, with reference to the accompanying drawings illustrating several embodiments thereof and in which : -

Fig. 1 is a cross-section through a shaft seal embodying the invention;

Fig. 2 is a front elevation of the spring washer of the arrangement of Fig. 1;

Fig. 3 is a radial section through a modified form of the washer shown in Fig. 2;

Fig. 4 is a view corresponding to Fig. 1, and shows another embodiment of the invention;

Fig. 5 is a view corresponding to Fig. 1, and shows a still further embodiment of the invention; and

Fig. 6 is a front elevation of the spring washer of the arrangement of Fig. 5.

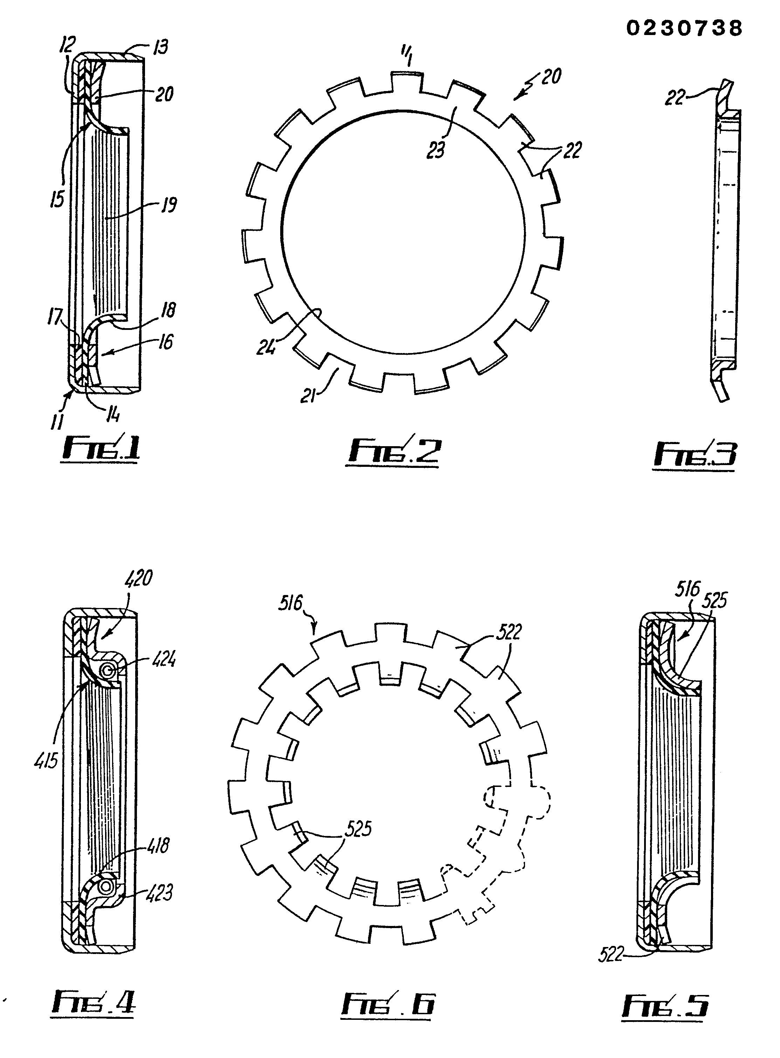

Referring now to the drawings, and in particular to Figs. 1 and 2 thereof, a shaft seal comprises a casing 11 having an annular part 12 and peripheral flange 13 thereto, the casing 11 receiving the radial flange 14 of a flexible sealing member 15 and such sealing member 15 being held in position relative to the casing by a securing means 16. A gasket or plastic sealant 17 may be provided between the annular part of the casing 11 and the overlying flange 14 of the sealing member 15.

Sealing member 15, which member may be of rubber, leather, polytetrafluorethylene (PTFE) or other material suitable for use in the context of shafts and like seals, has a frusto-conical part 18 for engagement with the surface to be sealed, such frusto-conical part being formed integrally with radial flange 14 aforesaid.

- 3 -

If desired, a fluid return formation 19 may be provided on the radially inner surface of the frusto-conical part 18 of the sealing member.

Securing means 16 comprises a spring washer 20 having a castellated or slotted outer periphery 21 thereto, the radial limbs 22 defining such periphery being an interference fit in flange 13 of the casing. As is evident from Fig. 1, radial limbs 22 extend from the plane of the annular part 23 of the washer 20 outwardly of the casing 11, whilst the inner periphery 24 of such washer 20 is in substantial alignment with the inner peripheries of the annular casing 11 and of the gasket 17.

On assembly of the shaft seal, the spring washer 20 is pressed into position within the casing 11 so as to clamp the radial flange 14 to the sealing member 15 between such washer 20 and the annular part 12 of the casing 11, the interference fit relationship between the washer 20 and casing flange 13, allied to the resilient nature of the washer 20, ensuring that the sealing member 15 remains clamped in position, whilst the presence of gasket 17 precludes leakage between the sealing member 15 and casing 11.

An axially extending flange may be provided at the inner periphery of the washer 20, as is shown in Fig. 3.

In an alternative arrangement, see now Fig. 4, the washer 420 may be profiled to provide a radially inwardly directed lip 423 which serves to hold a garter spring 424 in position on the frusto-conical part 418 of the sealing member 415, the position of the garter

- 4 -

spring relative to the frusto-conical part of the sealing member being determined by the particular profile adopted and providing for optimum positioning of the load arising from the presence of the garter spring for efficient sealing of the shaft.

In a still further embodiment, see now Figs. 5 and 6, the securing means 516 is castellated not only at its outer periphery, thus to provide the casing-engaging limbs 522, but also at its inner periphery. The radial limbs 525 which define the castellated inner periphery to the spring washer are of curved configuration when viewed in radial section, such limbs being concave outwardly of the seal and being of such profile as will lend support to (or provide a degree of loading of) the remote end of the frusto-conical part of the sealing member.

The invention is not limited to the exact detail of the embodiments hereinbefore set forth, since alternatives will readily present themselves to one skilled in the art. For example, whilst it may be found convenient to provide a fluid return formation at the inner surface of the frusto-conical part of the sealing member, circumstances may exist in which the presence of such a formation is unnecessary. Furthermore, whilst the radial extensions to the spring washer are shown as being rectilinear, it may be found desirable, in some instances for the ends of such extensions to be of semi-circular or other form, such as is indicated, by way of example, in Fig. 6.

- 5 -

Again, whilst the invention is disclosed in the context of arrangements which seal on a rotating shaft disposed radially inwardly of the casing, analogous arrangements may be provided to form a seal at a cylindrical surface existing radially outwardly of the sealing member.

CLAIMS

1. A shaft or like seal comprising a casing having an annular part and a flange about a periphery of said annular part, a sealing member mounted in said casing, the sealing member having a radial flange thereto, and securing means operable to secure the sealing member in position in the casing with the radial flange of the sealing member clamped between such securing means and the annular part of the casing, characterised in that the securing means comprises a spring washer having radial, casing engaging formations at a periphery thereof, the said radial formations being an interference fit relative to the flange of the said casing.

2. A shaft or like seal as claimed in claim 1, characterised in that the washer is of annular form and includes a multiplicity of casing-engaging radial formations.

3. A shaft or like seal as claimed in claim 1 or 2, further characterised in that the casing-engaging radial formations are inclined to the plane of the annular part of the washer axially outwardly of the casing.

4. A shaft or like seal as claimed in claim 2 or 3, further characterised in that each radial formation is of rectilinear form when viewed in the axial direction of the seal.

5. A shaft or like seal as claimed in any one of the preceding claims, further characterised by an axial flange at that periphery of the washer remote from the casing-engaging radial formations.

6. A shaft or like seal as claimed in any one of claims 1 to 4, further characterised by a multiplicity of radial limbs at that periphery of the washer remote from the casing-engaging formations, each said limb being of curved configuration when viewed transversely of the seal and being adapted and arranged to lend support to the remote end of the sealing member.

7. A shaft or like seal as claimed in any one of claims 1 to 4, further characterised by a garter spring at that surface of the sealing member remote from the surface to be sealed, the washer being profiled to receive and to locate the said garter spring relative to the sealing member.

8. A shaft or like seal as claimed in any one of the preceding claims, wherein the radial formations are provided at the outer periphery of the washer.

9. A shaft or like seal as claimed in any one of the preceding claims, further characterised by a gasket interposed between the annular part of the casing and the radial flange of the sealing member.

0230738

**FIG.1**

**FIG.2**

**FIG.3**

**FIG.4**

**FIG.6**

**FIG.5**